Europäisches Patentamt

European Patent Office

Office européen des brevets

(19)

(11) Numéro de publication : **0 067 142**
**B1**

(12) **FASCICULE DE BREVET EUROPÉEN**

(45) Date de publication du fascicule du brevet :
28.08.85

(51) Int. Cl.⁴ : **B 01 D 1/14**

(21) Numéro de dépôt : **82870029.4**

(22) Date de dépôt : **03.06.82**

(54) **Procédé et appareil pour la vaporisation et la condensation automatiques et continues.**

(30) Priorité : **04.06.81 FR 8111054**

(43) Date de publication de la demande :
**15.12.82 Bulletin 82/50**

(45) Mention de la délivrance du brevet :
**28.08.85 Bulletin 85/35**

(84) Etats contractants désignés :
**AT BE CH DE GB IT LI LU NL SE**

(56) Documents cités :
**CH-A- 191 003**
**FR-A- 568 600**
**FR-A- 1 010 562**
**FR-A- 1 120 536**
**FR-A- 1 261 066**
**FR-A- 2 333 542**
**GB-A- 181 406**
**GB-A- 342 741**
**GB-A- 2 012 176**
**US-A- 3 605 850**
**US-A- 4 200 497**

(73) Titulaire : **ATELIERS SUSSMEYER SprL**
**Rue de Birmingham, 222**
**B-1070 Bruxelles (BE)**

(72) Inventeur : **Sussmeyer, Robert**
**Avenue de Jette 175**
**B-1090 Bruxelles (BE)**
Inventeur : **Pluvinage, Alain**
**Rue du Castel 8**
**B-7801 Irchonwelz (BE)**
Inventeur : **Moenaert, Christian**
**Rue Alfred Dubois 40**
**B-1080 Bruxelles (BE)**

(74) Mandataire : **Plucker, Guy et al**
**OFFICE KIRKPATRICK 4 Square de Meeûs**
**B-1040 Bruxelles (BE)**

Jouve, 18, rue St-Denis, 75001 Paris, France

## Description

La présente invention a pour objet un procédé et un appareil pour la vaporisation et la condensation automatiques et continues.

La distillation et le séchage sont deux opérations mettant en jeu la vaporisation d'une phase volatile qui trouvent fréquemment leur application dans les industries de la chimie et de la pharmàcie. La conduite de la vaporisation de la phase volatile est décisive pour le succès de l'opération tant du point de vue technique, qui est celui de la qualité des fractions et des résidus, outre de la difficulté des manipulations, que du point de vue économique, qui est celui des dépenses d'investissement et de fonctionnement.

Dans la pratique, c'est la surface d'échange de chaleur à travers laquelle est apportée la chaleur de vaporisation qui retient le plus l'attention. Lorsque le mélange homogène, c'est-à-dire monophasique, ou hétérogène, c'est-à-dire polyphasique, comme une suspension, une dispersion ou une boue, entre autres, contient une substance qui n'est pas inerte dans les conditions de travail, par exemple qui est susceptible de pyrolyse ou de polymérisation ou qui est susceptible d'une fusion pâteuse dans le cas particulier des solides d'un mélange polyphasique, la surface de chauffe atteint rapidement un état d'encrassement tel que la poursuite de la vaporisation devient économiquement ruineuse ou tout simplement impossible.

Lorsque le mélange traité contient des substances inflammables ou très sensibles à la chaleur, l'apport de chaleur est traditionnellement réalisé au moyen d'un fluide caloporteur, qui est le plus souvent l'eau, éventuellement sous forme de vapeur, mais le fait de travailler avec un double échange de chaleur ne peut qu'augmenter la déperdition thermique et donc la dépense à consentir, sans pour autant remédier à un gradient thermique exagéré dans le mélange traité ni à un encrassement de la surface d'échange à son contact.

Un domaine particulier d'activité industrielle où la distillation et le séchage doivent être exécutés sur des mélanges rendant apparemment inéluctable l'encrassement des surfaces d'échange de chaleur est celui du traitement des résidus de peintures, de vernis, d'encres d'imprimerie et de mélanges analogues. Du fait que ce traitement combine les difficultés les plus diverses, l'invention est décrite plus en détail ci-après avec référence à ce cas spécifique, bien qu'elle soit évidemment applicable à toute opération exposant aux mêmes inconvénients que la récupération des solvants dans le traitement de ces résidus.

Les prescriptions légales en matière d'écologie interdisent en effet de rejeter dans le milieu naturel des quantités importantes de solvants polluants chargés de divers agents chimiques, mais l'industriel ne dispose pas toujours de l'appareillage complexe et onéreux nécessaire pour récupérer les solvants et doit donc s'adresser à des entreprises spécialisées. Celles-ci distillent en vrac et en grand les solvants usés provenant des sources les plus diverses, mais il en résulte inévitablement entre les solvants frais de l'une ou l'autre origine particulière et les solvants redistillés de fortes différences de composition qui rendent aléatoire un recyclage pour une application exigeant un solvant ayant des propriétés bien particulières.

Il est donc de l'intérêt évident des utilisateurs de disposer de leur propre appareil de récupération de solvants qui soit sûr, fiable, facile à conduire et donne à tout moment du solvant récupéré de composition bien définie.

Un système dont l'application pourrait être envisagée est celui du stripping ou entraînement à la vapeur, dont le principe est d'injecter de la vapeur d'eau dans le mélange à traiter de façon qu'il se forme une phase vapeur comprenant non seulement de la vapeur d'eau, mais aussi de la vapeur du liquide qu'on veut récupérer. La pression totale de cette phase vapeur est la somme des pressions partielles de la vapeur d'eau et de la vapeur de l'autre liquide, de sorte que la condensation donnera un mélange d'eau et de l'autre liquide, indépendamment du fait que ce dernier est ou non miscible à l'eau. Il est toutefois immédiatement évident que le rapport des pressions partielles entre l'eau et l'autre liquide est d'autant plus en défaveur de ce dernier que son point d'ébullition est plus élevé et il s'ensuit, premièrement, que les volumes à traiter deviennent exagérés lorsque l'autre liquide a un point d'ébullition fort élevé et, deuxièmement, qu'en pratique l'extraction complète du second liquide est impossible. Par conséquent, l'entraînement à la vapeur ou stripping laisse subsister un résidu qui non seulement n'est pas sec, mais de plus contient encore une quantité notable de liquide polluant.

D'après le brevet belge n° 806.305, on connaît aussi des appareils dans lesquels la surface d'échange de chaleur, au lieu d'être solide, est une surface liquide, en l'occurrence la surface d'une couche d'huile ou d'un liquide caloporteur. Il est évident qu'on échappe ainsi à l'encrassement d'une surface solide. Bien que ce mode opératoire résolve une difficulté importante, il n'en reste pas moins nécessaire d'éliminer ensuite les solides de l'huile, laquelle peut en outre entrer en interaction avec certains solides résiduels, par exemple des résines qui la gélifient.

Un autre système à envisager est la vaporisation en couche mince sur une surface régulièrement raclée. Les appareils de ce genre, qui sont classiques, notamment dans les industries alimentaires, sont d'un fonctionnement plus aléatoire pour la récupération des solvants à partir de résidus de peintures et autres boues analogues, du fait que le raclage des résines, par exemple époxydes polymérisées, reste imparfait.

Les recherches de la Demanderesse l'ont amenée à concevoir un procédé et un appareil pour la vaporisation et la condensation automatiques et continues, dont l'avantage est d'éviter les insuffisances des systèmes connus envisagés ci-dessus et dont le principe est que la surface d'échange de chaleur est maintenue propre du fait que l'échange de chaleur apportant la chaleur nécessaire au système est effectué par contact de cette surface avec un gaz caloporteur propre.

L'invention a dès lors pour objet un procédé automatique et continu de vaporisation et de condensation pour le fractionnement de mélanges comprenant au moins une fraction volatile liquide, suivant lequel une partie de la vapeur de la fraction volatile qui se forme dans l'enceinte de vaporisation est surchauffée de manière continue dans un circuit de circulation et injectée dans le mélange à fractionner auquel elle abandonne sa chaleur sensible de vaporisation, de sorte qu'au moins une fraction liquide se sépare du mélange par vaporisation, une quantité de vapeur surchauffée de la fraction volatile injectée de manière continue dans le mélange à fractionner étant continuellement recyclée dans ledit circuit de circulation où elle est surchauffée et injectée dans le mélange à fractionner, le reste de la vapeur de la fraction volatile étant condensé et recueilli.

Il convient de remarquer que les opérations peuvent être exécutées dans une enceinte maintenue sous la pression atmosphérique, en dépression ou en surpression.

L'invention a aussi pour objet un appareil destiné à mettre en œuvre le procédé sous ses diverses formes de réalisation, qui comprend :

— une enceinte de vaporisation constituée par une cuve munie d'un dispositif pour l'alimentation d'un mélange à fractionner et d'un dispositif de sortie du résidu et surmonté d'une colonne de départ de gaz,

— des moyens aptes à chauffer le mélange à fractionner de façon à porter celui-ci à ébullition,

— un condenseur situé à l'extérieur de l'enceinte de vaporisation et raccordé à la colonne de départ de gaz, propre à la condensation et à la collecte d'une fraction volatile.

Dans l'appareil suivant l'invention, lesdits moyens consistent en un circuit de circulation de vapeur distinct du circuit comprenant ledit condenseur et comportant une soufflante dont l'orifice d'entrée communique avec la partie supérieure de la chambre de vaporisation, cette soufflante étant apte à recueillir une partie de la vapeur de la fraction volatile qui se forme dans l'enceinte de vaporisation et à envoyer cette partie de la vapeur de la fraction volatile dans un conduit de sortie qui passe par un dispositif de chauffage, apte à chauffer cette partie de la vapeur de la fraction volatile à une température supérieure à la température d'ébullition de la fraction volatile, ledit conduit de sortie portant à son extrémité un distributeur mettant en contact la partie recueillie de la fraction volatile ainsi surchauffée avec le contenu de ladite cuve.

Pour éviter que le circuit de circulation de gaz soit contaminé par entraînement mécanique de particules liquides et solides, l'appareil comporte avantageusement un séparateur de brouillard monté en amont du condenseur et, au cas où la soufflante communique avec la zone supérieure de l'enceinte de vaporisation, en amont aussi de la soufflante.

Il est judicieux que l'ensemble du circuit de circulation de gaz caloporteur soit monté à l'intérieur de l'enceinte de vaporisation.

Toutefois, suivant une forme d'exécution particulière de l'appareil, le dispositif de chauffage que comporte le circuit de circulation de gaz caloporteur est monté à l'extérieur de l'enceinte de vaporisation.

Dans toutes les formes de réalisation de l'appareil, une bonne économie de fonctionnement est assurée par le fait que l'enceinte de vaporisation est calorifugée par une ou plusieurs couches d'isolant thermique.

Pour garantir le degré de sécurité le plus élevé, même pour le traitement de mélanges à bas point d'éclair, le dispositif de chauffage est un échangeur de chaleur à vapeur recevant de la vapeur vive par une conduite et restituant de la vapeur plus froide et/ou de l'eau de condensation par une autre conduite.

Suivant une forme de réalisation avantageuse de l'appareil, de distributeur de gaz chauffé est un répartiteur à becs, qui débite le gaz chauffé avec une impulsion suffisante pour induire des mouvements dans le contenu de la cuve.

Pour la conduite des opérations sous pression atmosphérique, en dépression ou en surpression, l'appareil comprend un dispositif entretenant une pression constante.

Pour que l'appareil puisse fonctionner longtemps en marche continue, le dispositif d'alimentation de la cuve est un dispositif de sortie de résidu sec à marche continue.

Souvent, il suffit que l'alimentation de la cuve soit continue alors que le dispositif de sortie de résidu de la cuve est un simple regard de visite permettant d'évacuer le résidu sec au terme d'une période de travail.

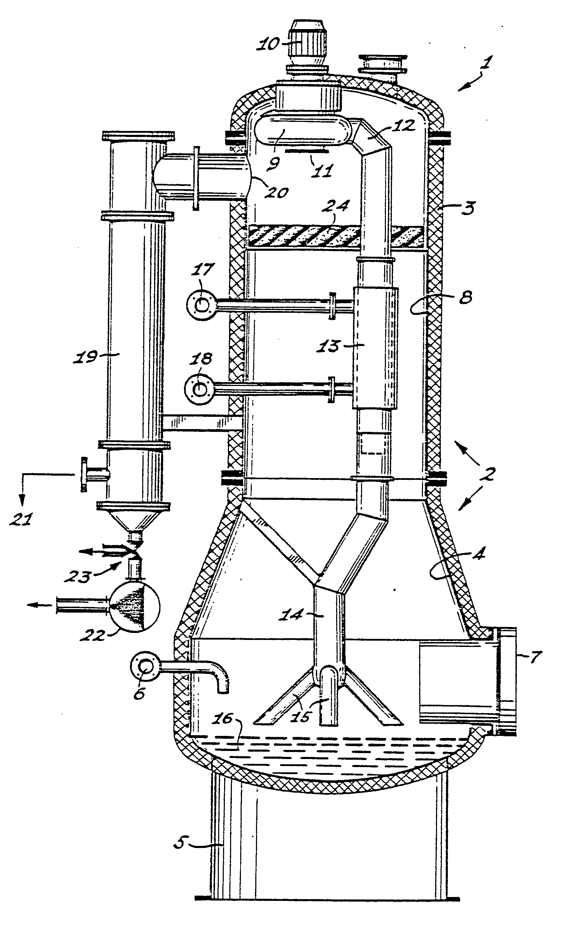

L'invention est davantage illustrée par la description d'une forme de réalisation spécifique de l'appareil convenant pour traiter des résidus de peintures, tel qu'il est représenté au dessin annexé.

L'appareil 1 pour la conduite du procédé de l'invention, appliqué au traitement des résidus de peintures, comprend une enceinte de vaporisation 2 calorifugée par une couche d'un isolant thermique 3 et constituée par une couche d'un isolant thermique 3 et constituée par une cuve inférieure 4 montée sur une embase 5, munie d'un dispositif d'alimentation 6 et d'un dispositif de sortie de résidu 7, en l'occurrence du type regard de visite, et surmontée d'une colonne de départ de gaz 8 ; un circuit de circulation de gaz comprenant à sont tour, à l'intérieur de la colonne de départ de gaz 8, une soufflante 9 qui est actionnée par un moteur électrique 10 et dont l'aspiration 11 est située dans la partie supérieure de l'enceinte de vaporisation 2, tandis que le conduit de sortie 12 de la soufflante passe par un échangeur de chauffage 13 et porte, à son extrémité inférieure, un distributeur de gaz chauffé 14 dont les becs 15 débouchent à petite distance au-dessus du contenu 16 de la cuve 4. L'échangeur de chauffage 13 est un échangeur à vapeur recevant de la vapeur vive par la conduite 17 et restituant de la vapeur plus froide et/ou de l'eau de condensation par la conduite 18, ces deux conduites traversant la paroi calorifugée de la colonne de départ de gaz 8. Le circuit de circulation de gaz est complété, à l'extérieur de l'enceinte de vaporisation 2, par un condenseur 19 qui est propre à la condensation et à la collecte de la fraction vaporisée. Le condenseur 19 reçoit par son admission 20 les vapeurs prélevées à la partie supérieure de la colonne de départ de gaz 8, à proximité de l'aspiration 11 de la soufflante 9. Le condenseur 19 comporte à sa partie inférieure une sortie de condensat 21, ainsi qu'un dispositif entretenant dans l'appareil 1 une pression constante et constitué par une pompe à vide 22 raccordée au condenseur 19 par un robinet à trois voies 23 qui fait communiquer le condenseur 19 avec l'atmosphère et/ou avec la pompe à vide 22. Un séparateur de brouillard 24 est logé dans la colonne de départ de gaz 8 sous la soufflante 9 et l'admission 20 du condenseur 19, par conséquent à l'amont du condenseur et de la soufflante.

L'appareil 1 se prête particulièrement au traitement de résidus boueux et épais, comme des résidus de peintures, d'encres d'imprimerie et de vernis, dont il convient de récupérer la phase liquide, par exemple du solvant naphta. Du fait que l'aspiration 11 de la soufflante 9 est proche de l'admission 20 du condenseur 19, il s'établit, au cours du fonctionnement de l'appareil, un partage entre la fraction de la phase vapeur refoulée vers l'échangeur de chauffage 13 et la fraction de la phase vapeur qui est condensée dans le condenseur 19. Lorsque la pompe à vide 22, qui est de préférence une pompe à anneau liquide, fonctionne, l'appareil travaille sous vide, la communication entre la pompe et l'appareil étant établie au moyen du robinet à trois voies 23. Le même appareil peut toutefois fonctionner sous la pression atmosphérique par une manœuvre appropriée du robinet 23 lorsque la pompe à vide 22 est arrêtée. Du fait que l'échangeur de chauffage 13 est en contact avec une phase gazeuse propre, il ne s'encrasse pas et reste en bon état de fonctionnement. D'autre part, les déperditions thermiques sont réduites au minimum du fait que l'échangeur de chauffage est logé à l'intérieur de l'enceinte calorifugée 2. Il convient de noter que l'échangeur à vapeur vive 13 pourrait être remplacé par un échangeur à chauffage électrique spécialement conçu pour éviter les risques d'explosion.

**Revendications**

1. Procédé automatique et continu de vaporisation et de condensation pour le fractionnement de mélanges comprenant au moins une fraction volatile liquide, caractérisé en ce qu'une partie de la vapeur de la fraction volatile qui se forme dans l'enceinte de vaporisation (2) est surchauffée de manière continue dans un circuit de circulation et injectée dans le mélange à fractionner (16) auquel elle abandonne sa chaleur sensible de vaporisation, de sorte qu'au moins une fraction liquide se sépare du mélange par vaporisation, une quantité de vapeur de la fraction volatile égale à celle de la vapeur surchauffée de la fraction volatile injectée de manière continue dans le mélange à fractionner étant continuellement recyclée dans ledit circuit de circulation où elle est surchauffée et injectée dans le mélange à fractionner, le reste de la vapeur de la fraction volatile étant condensé et recueilli.

2. Procédé suivant la revendication 1, caractérisé en ce que les opérations sont exécutées dans une enceinte maintenue sous la pression atmosphérique.

3. Procédé suivant la revendication 1, caractérisé en ce que les opérations sont exécutées dans une enceinte maintenue en dépression.

4. Procédé suivant la revendication 1, caractérisé en ce que les opérations sont exécutées dans une enceinte maintenue en surpression.

5. Appareil destiné à mettre en œuvre le procédé suivant l'une quelconque des revendications précédentes comprenant :
— une enceinte de vaporisation (2) constituée par une cuve (4) munie d'un dispositif pour l'alimentation (6) d'un mélange (16) à fractionner et d'un dispositif de sortie du résidu (7) et surmontée d'une colonne de départ de gaz (8),
— des moyens aptes à chauffer le mélange à fractionner de façon à porter celui-ci à ébullition,
— un condenseur (19) situé à l'extérieur de l'enceinte de vaporisation (2) et raccordé à la colonne de départ de gaz (8), propre à la condensation et à la collecte d'une fraction volatile, caractérisé en ce que lesdits moyens consistent en un circuit de circulation de vapeur distinct du circuit comprenant ledit condenseur (19) et comportant une soufflante (9) dont l'orifice d'entrée (11) communique avec la partie supérieure de la chambre de vaporisation (2), cette soufflante (9) étant apte à recueillir une partie de la vapeur de la fraction volatile qui se forme dans l'enceinte de vaporisation (2) et à envoyer cette partie de la vapeur de la fraction volatile dans un conduit de sortie (12) qui passe par un dispositif de chauffage (13), apte à chauffer cette partie de la vapeur de la fraction volatile à une température supérieure à la température d'ébullition de la fraction volatile, ledit conduit de sortie (12) portant à son extrémité un distributeur (14) mettant en contact la partie recueillie de la fraction volatile ainsi surchauffée avec le contenu de ladite cuve (4).

6. Appareil suivant la revendication 5, caractérisé en ce qu'il comporte un séparateur de brouillard (24) monté en amont dudit condenseur (19) et en amont de ladite soufflante (9).

7. Appareil suivant l'une quelconque des revendications 5 ou 6, caractérisé en ce que l'ensemble dudit circuit de circulation est monté à l'intérieur de l'enceinte de vaporisation (2).

8. Appareil suivant l'une quelconque des revendications 5 ou 6, caractérisé en ce que ledit dispositif de chauffage (13) est monté à l'extérieur de l'enceinte de vaporisation (2).

9. Appareil suivant l'une quelconque des revendications 5 à 8, caractérisé en ce que l'enceinte de vaporisation (2) est calorifugée par une ou plusieurs couches d'isolant thermique (3).

10. Appareil suivant l'une quelconque des revendications 5 à 9, caractérisé en ce que le dispositif de chauffage (13) est un dispositif échangeur de chaleur à vapeur recevant de la vapeur vive par une conduite (17) et restituant de la vapeur plus froide et/ou de l'eau de condensation par une autre conduite (18).

11. Appareil suivant l'une quelconque des revendications 5 à 10, caractérisé en ce que ledit distributeur (14) est un répartiteur à becs (15) qui débite la partie surchauffée de la fraction vaporisée avec une impulsion suffisante pour induire des mouvements dans ledit contenu (16) de ladite cuve (4).

12. Appareil suivant l'une quelconque des revendications 5 à 11, caractérisé en ce qu'il comprend un dispositif entretenant une pression constante qui est constitué par une pompe à vide (22) raccordée audit condenseur (19) par un robinet à trois voies (23) faisant communiquer ledit condenseur (19) avec l'atmosphère et/ou ladite pompe (22).

13. Appareil suivant l'une quelconque des revendications 5 à 12, caractérisé en ce que ledit dispositif d'alimentation (6) est un dispositif à marche continue et le dispositif de sortie de résidu (7) est un dispositif de sortie de résidu sec à marche continue.

14. Appareil suivant l'une quelconque des revendications 5 à 12, caractérisé en ce que ledit dispositif d'alimentation (6) est un dispositif à marche continue et ledit dispositif de sortie de résidu (7) est un dispositif de sortie de résidu sec à marche intermittente.

## Claims

1. Automatic and continuous vaporization and condensation process for the fractionation of mixtures comprising at least one liquid volatile fraction, characterised in that part of the vapour of the volatile fraction which forms in the vaporization chamber (2) is superheated in a continuous manner in a circulation circuit and injected into the mixture to be fractionated (16) to which it releases its vaporization sensible heat, so that at least one liquid fraction leaves the mixture by vaporization, an amount of vapour equal to the amount of superheated vapour which is injected in a continuous manner into the mixture to be fractionated being continuously recycled to said circulation circuit where it is superheated and injected into the mixture to be fractionated, the surplus of the vapour of the volatile fraction being condensed and collected.

2. A process according to claim 1, characterised in that the operations are effected in a chamber kept at atmospheric pressure.

3. A process according to claim 1, characterised in that the operations are effected in a chamber kept at subatmospheric pressure.

4. A process according to claim 1, characterised in that the operations are effected in a chamber kept at superatmospheric pressure.

5. An apparatus for effecting the process according to any of the preceding claims, comprising :
— a vaporization chamber (2) consisting of a cell (4) equipped with a device (6) for feeding a mixture to be fractionated (16) and a device for discharging the residue (7), and being surmounted by a gas outlet column (8),
— means for heating the mixture to be fractionated in order to bring said mixture to boil,
— a condenser (19) located outside the vaporization chamber (2) and connected to the gas outlet column (8), suitable for the condensation and collection of a volatile fraction, characterised in that the said means consist of a vapour circulation circuit which is distinct from the circuit comprising said condenser (19) and which comprises a fan (9) whose inlet port (11) communicates with the upper zone of the vaporization chamber (2), said fan (9) being able to draw in a part of the vapour of the volatile fraction which is formed in the vaporization chamber (2) and feed said part of the vapour of the volatile fraction into an outlet line (12), which outlet line passes through a heating device (13), said heating device (13) being able to heat said part of the vapour of the volatile fraction to a temperature which is higher than the boiling temperature of the volatile fraction, said outlet line (12) carrying at its end a distributor (14) which brings the collected part of the volatile fraction thus superheated into contact with the contents (16) of the said cell (4).

6. An apparatus according to claim 5, characterised in that it comprises a mist separator (24) located upstream of the said condenser (19) and upstream of the said fan (9).

7. An apparatus according to any one of claims 5 or 6, characterised in that the whole of the said circulation circuit is located inside the vaporization chamber (2).

8. An apparatus according to any one of claims 5 or 6, characterised in that the said heating device (13) is mounted outside the vaporization chamber (2).

9. An apparatus according to any one of claims 5 to 8, characterised in that the vaporization chamber (2) is heat-insulated by one or more layers of heat-insulating material (3).

10. An apparatus according to any one of claims 5 to 9, characterised in that the heating device (13) is a steam heat exchanger which receives live steam through one line (17) and returns colder steam and/or condensation water through another line (18).

11. An apparatus according to any one of claims 5 to 10, characterised in that the said distributor (14) is a nozzle manifold (15) which delivers the superheated part of the vaporisated fraction with sufficient impulse to induce movements in the said contents (16) of the said cell (4).

12. An apparatus according to any one of claims 5 to 11, characterised in that it comprises a device which maintains a constant pressure and which consists of a vacuum pump (22) connected to the said condenser (19) by a three-way valve (23) which connects the said condenser (19) to the atmosphere and/or to the said pump (22).

13. An apparatus according to any one of claims 5 to 12, characterised in that the said feeding device (6) is a continuously operating device and the said residue discharging device (7) is a continuously operating dry residue discharging device.

14. An apparatus according to any one of claims 5 to 12, characterised in that the said feeding device (6) is a continuously operating device and the said residue discharging device (7) is an intermittentoperation dry residue discharging device.

**Patentansprüche**

1. Automatisches und kontinuierliches Verdampfungs- und Kondensationsverfahren für die Fraktionierung von Mischungen, die mindestens eine flüchtige flüssige Fraktion enthalten, dadurch gekennzeichnet, daß ein Teil des Dampfes der flüchtigen Fraktion, der sich im Verdampfungsraum (2) bildet, in einem Zirkulationskreislauf kontinuierlich überhitzt und in die zu fraktionierende Mischung (16) eingeblasen wird, an die er seine empfindliche Verdampfungswärme abgibt, so daß sich mindestens eine flüssige Fraktion von der Mischung durch Verdampfung abtrennt, und daß eine Dampfmenge der flüchtigen Fraktion gleich jener des überhitzten Dampfes der flüchtigen Fraktion gleich jener des überhitzen Dampfes der flüchtigen Fraktion kontinuierlich in die zu fraktionierende Mischung eingeblasen wird, die kontinuierlich in den genannten Zirkulationskreislauf rückgeführt wird, wo sie überhitzt und in die zu fraktionierende Mischung eingeblasen wird, wobei der Rest des Dampfes der flüchtigen Fraktion kondensiert und gesammelt wird.

2. Verfahren nach Anspruch 1, dadurch gekennzeichnet, daß die Vorgänge in einem Raum durchgeführt werden, der unter Atmosphärendruck gehalten wird.

3. Verfahren nach Anspruch 1, dadurch gekennzeichnet, daß die Vorgänge in einem Raum durchgeführt werden, der unter Unterdruck gehalten wird.

4. Verfahren nach Anspruch 1, dadurch gekennzeichnet, daß die Vorgänge in einem Raum durchgeführt werden, der unter Überdruck gehalten wird.

5. Vorrichtung zum Durchführen des Verfahrens nach einem der vorhergehenden Ansprüche, die aufweist :
— einen Verdampfungsraum (2), der von einem Behälter (4) gebildet wird, welcher mit einer Vorrichtung zum Zuführen (6) einer zu fraktionierenden Mischung (16) und einer Vorrichtung zum Auslassen des Rückstandes (7) versehen ist und von der sich eine Gasableitungssäule (8) nach oben erstreckt,
— Mitteln zum Erhitzen der zu fraktionierenden Mischung, um diese zum Sieden zu bringen,
— einen Kondensator (19), der außerhalb des Verdampfungsraumes (2) angeordnet ist und mit der Gasableitungssäule (8) in Verbindung steht, und der für die Kondensation und das Sammeln einer flüchtigen Fraktion geeignet ist, dadurch gekennzeichnet, daß die genannten Mittel aus einem Dampfzirkulationskreislauf bestehen, der von dem Kreislauf verschieden ist, der den genannten Kondensator (19) aufweist, und ein Gebläse (9) besitzt, dessen Eingangsöffnung (11) mit dem oberen Teil der Verdampfungskammer (2) in Verbindung steht, wobei dieses Gebläse (9) geeignet ist zum Sammeln eines Teiles des Dampfes der flüchtigen Fraktion, der sich in der Verdampfungskammer (2) bildet, und zum Abgeben dieses Teils des Dampfes der flüchtigen Fraktion in eine Auslaßleitung (12), die durch eine Erhitzungsvorrichtung (13) hindurchgeht, die zum Erhitzen dieses Teils des Dampfes der flüchtigen Fraktion auf eine Temperatur über die Siedetemperatur der flüchtigen Fraktion geeignet, ist, wobei die genannte Auslaßleitung (12) an ihrem Ende einen Verteiler (14) aufweist, der den gesammelten und überhitzten Teil des flüchtigen Fraktion mit dem Inhalt des genannten Behälters (4) zusammenbringt.

6. Vorrichtung nach Anspruch 5, dadurch gekennzeichnet, daß sie einen Nebelabscheider (24) aufweist, der stromaufwärts des genannten Kondensators (19) und stromaufwärts des genannten Gebläses (9) angeordnet ist.

7. Vorrichtung nach einem der Ansprüche 5 oder 6, dadurch gekennzeichnet, daß der gesamte Zirkulationskreislauf im Inneren des Verdampfungsraumes (2) angeordnet ist.

8. Vorrichtung nach einem der Anspruch 5 oder 6, dadurch gekennzeichnet, daß die genannte Erhitzungsvorrichtung (13) außerhalb des Verdampfungsraumes (2) angeordnet ist.

9. Vorrichtung nach einem der Ansprüche 5 bis 8, dadurch gekennzeichnet, daß der Verdampfungsraum (2) durch eine oder mehrere wärmeisolierende Schichten (3) wärmeisoliert ist.

10. Vorrichtung nach einem der Ansprüche 5 bis 9, dadurch gekennzeichnet, daß die Erhitzungsvorrichtung (13) eine Dampfwärmeaustauschvorrichtung ist, die den lebenden Dampf durch eine Leitung (17) aufnimmt und den kälteren Dampf und/oder Kondensationswasser durch eine andere Leitung (18) wieder abgibt.

11. Vorrichtung nach einem der Ansprüche 5 bis 10, dadurch gekennzeichnet, daß der genannte Verteiler (14) ein Verteiler mit Schnäbeln (15) ist, der den überhitzten Teil der verdampften Fraktion mit einem ausreichenden Impuls, um Bewegungen im genannten Inhalt (16) des genannten Behälters (4) zu bewirken, abgibt.

12. Vorrichtung nach einem der Ansprüche 5 bis 11, dadurch gekennzeichnet, daß sie eine einen konstanten Druck aufrechterhaltende Einrichtung aufweist, die von einer Vakuumpumpe (22) gebildet wird, die mit dem genannten Kondensator (19) durch einen Dreiwegehahn (23) verbunden ist, der den genannten Kondensator (19) mit der Atmosphäre und/oder der genannten Pumpe (22) verbindet.

13. Vorrichtung nach einem der Ansprüche 5 bis 12, dadurch gekennzeichnet, daß die genannte Zufuhreinrichtung (6) eine kontinuierlich arbeitende Vorrichtung und die Vorrichtung zum Auslassen des Rückstandes (7) eine kontinuierlich arbeitende Vorrichtung zum Auslassen von trockenem Rückstand ist.

14. Vorrichtung nach einem der Ansprüche 5 bis 12, dadurch gekennzeichnet, daß die genannte Zufuhreinrichtung (6) eine kontinuierlich arbeitende Vorrichtung und die genannte Vorrichtung zum Auslassen des Rückstandes (7) eine intermittierend arbeitende Vorrichtung zum Auslassen von trockenem Rückstand ist.